# EUROPÄISCHE PATENTSCHRIFT

(11) **EP 2 762 761 B1**
(45) Veröffentlichungstag und Bekanntmachung des Hinweises auf die Patenterteilung: **06.04.2016**
(21) Anmeldenummer: 13174531.7
(22) Anmeldetag: 01.07.2013
(51) Int. Cl.: F16L 37/113, F16L 25/00, F23J 13/04

(54) **Abgasrohr sowie Abgasrohrsystem**
Exhaust pipe and exhaust pipe system
Tuyau d'échappement et système de tuyau d'échappement

(30) Priorität: 01.02.2013 DE 102013101067
(43) Veröffentlichungstag der Anmeldung: 06.08.2014
(60) Teilanmeldung: 16151928.5
(73) Patentinhaber: Bächle, Stefano, 8597 Landschlacht (CH)
(72) Erfinder: Bächle, Dieter, 8597 Landschlacht (CH)
(74) Vertreter: Wagner, Kilian

(56) Entgegenhaltungen:
- EP-A1- 0 522 410
- EP-A1- 2 000 723
- EP-A2- 1 024 321
- EP-A2- 1 286 099
- DE-A1- 19 509 579
- DE-A1-102005 045 482
- FR-A- 1 238 369
- US-A- 3 929 359
- US-A- 5 165 732
- US-A1- 2005 121 912
- US-A1- 2007 257 487

## Beschreibung

Die Erfindung betrifft ein Abgasrohr aus Kunststoff, bevorzugt aus Polyamid, mit abwechselnd angeordneten starren zylindrischen Glattrohr- und biegbaren Wellrohrabschnitten gemäß dem Oberbegriff des Anspruchs 1 sowie ein Abgasrohrsystem, umfassend ein derartiges Abgasrohr oder ein aus einem derartigen Abgasrohr abgetrennten Abgasrohrabschnitt sowie ein Sicherungselement gemäß Anspruch 9. Ferner betrifft die Erfindung ein Verfahren zum Festlegen eines Abgasrohres an einem Rohrstück gemäß Anspruch 15.

Aus der EP 1 024 321 B1 des Anmelders ist ein Abgasrohr aus Kunststoff mit abwechselnd angeordneten starren Glattrohr- und biegbaren Wellrohrabschnitten bekannt. Das bekannte Abgasrohr bildet einen Rohrstrang, aus dem Abgasrohrabschnitte, umfassend jeweils zwei endseitige starre Glattrohrabschnitte und mindestens einen biegbaren Wellrohrabschnitt beispielsweise durch Sägen oder Schneiden heraustrennbar sind, insbesondere um winklig zueinander angeordnete oder parallel versetzte starre Rohrstücke (flexibel) über den Abgasrohrabschnitt miteinander zu verbinden, in dem die Glattrohrabschnitte des Abgasrohrs oder des daraus abgetrennten Abgasrohrabschnittes in entsprechende Aufnahmen, insbesondere Muffen der versetzt zueinander angeordneten starren Abgasrohre eingeschoben werden. Die Abdichtung des Abgasstroms erfolgt über in Ringnuten der Muffenrohre angeordnete Dichtungen. Zur axialen Sicherung des Abgasrohrs oder des Abgasrohrabschnittes mit seinen Glattrohr- und Wellrohrabschnitten ist es bekannt, in der die Dichtung aufnehmenden Ringnut einen Federring aufzunehmen, der sich radial innen an einem Glattrohrabschnitt des Abgasrohres bzw. des Abgasrohrabschnittes abstützt und dieses klemmend fixiert.

Das bekannte Abgasrohr mit seinen abwechselnden starren Glattrohr- und biegbaren Wellrohrabschnitten hat sich hervorragend in der Praxis bewährt. Es bestehen jedoch Bestrebungen, die Montage des Abgasrohres und insbesondere die axiale Sicherung des Abgasrohres an, insbesondere als Muffenrohr ausgebildeten Rohren zu erleichtern.

Auf dem fachfremden Gebiet der Ableitung von feuchter Luft aus Wäschetrocknern ist ein in der US 7,240,930 B2 beschriebenes Wellrohr bekannt, welches keine abwechselnden Glatt- und Wellrohrabschnitte aufweist, sondern durch axial durchgehend gewindeförmig gewellt ist. Die Verbindung zu benachbarten Rohren erfolgt unmittelbar über eine Gewindeverbindung. Eine Abdichtung, wie sie bei Abgasrohren zwingend ist, ist mit der bekannten Technologie nicht realisierbar. Auch ist nicht erkennbar, wie mit dem bekannten Wellrohr sinnvoller Weise eine dichte Verbindung mit einem Muffenrohr herstellbar sein soll.

Aus der US 5,165,732 A ist ein metallisches Abgasrohr bekannt, welches durch Anbördeln eines weiteren Rohrstücks verlängerbar ist. Das bekannte Metallrohr weist endseitige Bajonettverschlussmittel auf.

Aus der EP 1 286 099 A2 ist ein Wellrohr bekannt, das endseitig an einem Konusabschnitt Bajonettverschlussmittel aufweist.

Die US 3,929,359 A beschreibt eine endseitige Schnappverbindung zum miteinander Verbinden von zwei Wellrohren.

Die EP 0 522 410 A1 beschreibt eine Gewindeverbindung von zwei Wellrohren.

Die EP 2 000 723 A1 beschreibt ein Abwasserrohrsystem.

Die DE 195 09 579 A1 beschreibt Edelstahlrohre mit ausschließlich endseitigen Bajonettverschlussmitteln.

Die US 2007/0257487 A1 zeigt starre Rohre mit endseitigen Bajonettverschlussmitteln.

Die DE 10 2005 045 482 A1 zeigt ein Gasrohr mit abwechselnd angeordneten starren Glattrohr- und biegbaren Wellrohrabschnitten, wobei die Sicherung des Abgasrohres oder eines daraus abgetrennten Abgasrohrstrangs durch Hintergreifen einer Welle eines Wellrohrabschnittes erfolgt.

Der Erfindung liegt daher die Aufgabe zugrunde, ein hinsichtlich seiner Montierbarkeit, insbesondere axialen Sicherbarkeit verbessertes Abgasrohr anzugeben, sowie ein diesbezüglich optimiertes Abgasrohrsystem. Bevorzugt soll auf die im Stand der Technik notwendigen Federringe zur axialen Sicherung des Abgasrohres verzichtet werden können. Darüber hinaus besteht die Aufgabe darin, ein Verfahren zur komfortablen Handhabung eines nach dem Konzept der Erfindung ausgebildeten Abgasrohres anzugeben.

Diese Aufgabe wird hinsichtlich des Abgasrohres mit den Merkmalen des Anspruchs 1 und hinsichtlich des Abgasrohrsystems mit den Merkmalen des Anspruchs 9 gelöst. Hinsichtlich des Verfahrens wird die Aufgabe mit den Merkmalen des Anspruchs 15 gelöst.

Vorteilhafte Weiterbildungen sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, am Abgasrohr integrale, d.h. einstückig mit dem Abgasrohr ausgebildete Sicherungsmittel vorzusehen, d.h. bei dessen Herstellung anzuformen, die derart ausgebildet sind, dass an diesen ein, bevorzugt hülsenförmiges Sicherungselement durch eine Relativdrehbewegung zum Abgasrohr zum Herstellen eines in axialer Richtung wirksamen Formschlusses festlegbar ist. Anders ausgedrückt umfasst das nach dem Konzept der Erfindung ausgebildete Abgasrohr integrale Sicherungsmittel, die ein Eindrehen eines von dem Abgasrohr separaten Sicherungselementes ermöglichen, derart, dass das Abgasrohr nach dieser Relativdrehbewegung gegen axiales Abziehen am Sicherungselement gesichert bzw. gehalten ist. Bevorzugt durchsetzt dabei das Abgasrohr das Sicherungselement in axialer Richtung. Das nach dem Konzept der Erfindung ausgebildete Abgasrohr zeichnet sich dadurch aus, dass ohne größeren Aufwand die erfindungsgemäßen Sicherungsmittel bei der Herstellung des Abgasrohres angeformt, d.h. vorgesehen werden können und es hierfür keines separaten Produktionsschrittes bedarf. Darüber hinaus zeichnet sich ein nach dem Konzept der Erfindung ausgebildetes Abgasrohr durch eine äußerst komfortable Handhabbarkeit beim axialen Sichern auf, da das axiale Sichern an einem benachbarten Rohrstück dadurch erfolgt, dass ein Sicherungselement, welches bevorzugt an dem benachbarten Rohrstück in axialer Richtung gesichert ist, durch Relativverdrehen zu dem Abgasrohr, genauer zu dessen Sicherungsmitteln, an diesem festlegbar ist, derart, dass ein in axialer Richtung wirksamer Formschluss resultiert, d.h. derart, dass das Sicherungselement mit seinen Eingriffsmitteln die Sicherungsmittel des Abgasrohres in Umfangsrichtung hintergreift. Hierdurch kann auf die vergleichsweise aufwändig zu fixierenden Federringe aus dem Stand der Technik verzichtet werden. Bevorzugt ist der Formschluss durch entsprechendes Verdrehen des Sicherungselementes, insbesondere entgegen einer Aufdrehrichtung, insbesondere nach Überwinden einer Arretierkraft (z.B. Klemmkraft) wieder lösbar.

Bevorzugt sind die axialen Sicherungsmittel und/oder die Eingriffsmittel des Sicherungselementes derart ausgebildet, dass gleichzeitig beim Relativverdrehen des Sicherungselementes relativ zu dem Abgasrohr eine Axialkraftkomponente erzeugt wird, die das Sicherungselement und das vorzugsweise axial an einem benachbarten Rohrstück gesicherte Sicherungselement axial gegeneinander verspannt. Dies kann dadurch erreicht werden, dass die Eingriffsmittel des Sicherungselementes und/oder die Sicherungsmittel des Abgasrohres einen Steigungsabschnitt aufweisen, der die gewünschte Axialkraftkomponente erzeugt. Ganz besonders bevorzugt ist es, wie später noch erläutert werden wird, wenn die Sicherungsmittel Arretiermittel aufweisen, um das Sicherungselement, insbesondere durch Verrasten mit den Arretiermitteln gegen ein unbeabsichtigtes Losdrehen zu sichern.

Insgesamt weist das erfindungsgemäße Abgasrohr demnach eine Vielzahl von Vorteilen gegenüber dem Stand der Technik auf, ohne auf die bekannten Vorteile zu verzichten. So ist es weiterhin möglich und beabsichtigt, aus einem bevorzugt als Rohrstrang ausgebildeten Abgasrohr beliebig lange Rohrabschnitte z.B. durch Sägern oder Schneiden herauszutrennen, umfassend zwei endseitige Glattrohrabschnitte und mindestens einen Wellrohrabschnitt.

Bevorzugt ist der Innendurchmesser der Glattrohrabschnitte zumindest näherungsweise gleich groß wie ein Innendurchmesser der Wellrohrabschnitte im Bereich von dessen Wellentälern.

Im Hinblick auf die Ausgestaltung der Glattrohrabschnitte, insbesondere im Hinblick auf deren Axialerstreckung gibt es unterschiedliche Möglichkeiten. Bevorzugt ist die Axialerstreckung der Glattrohrabschnitte so gewählt, dass bei einer näherungsweise mittigen Trennung eines Glattrohrabschnittes zwei Rohre resultieren, deren endseitige, zunächst aus einem gemeinsamen Glattrohrabschnitt resultierende Glattrohrabschnitte so lang bemessen sind, dass beide dichtend jeweils in einem Muffenrohr mit Innendichtung aufgenommen werden können. Um dies zu erreichen ist weiterbildungsgemäß vorgesehen, dass die Axialerstreckung der Glattrohrabschnitte mehr als 8cm, vorzugsweise mehr als 10cm beträgt und ganz besonders bevorzugt aus einem Wertebereich zwischen etwa 9cm und 15cm gewählt ist. Unabhängig von der Längenerstreckung der Glattrohrabschnitte ist es besonders bevorzugt, wenn die Glattrohrabschnitte eine Mittenmarkierung zur Markierung der axialen Mitte aufweisen, wobei es sich weiter bevorzugt um eine vollumfängliche Markierung, beispielsweise in Form einer umlaufenden Nut und/oder Radialerhebung handelt.

Im Hinblick auf die Ausbildung der Wellenkontur der Wellen des Wellrohrabschnittes gibt es unterschiedliche Möglichkeiten. Bevorzugt handelt es sich längsschnittlich um eine gerundete Wellenkontur, wobei es selbstverständlich auch denkbar ist, eine eckige, beispielsweise rechteckige Wellenkontur zu realisieren.

Besonders zweckmäßig ist es selbstverständlich, wenn mehrere axial beabstandete Sicherungsmittel am Abgasrohr vorgesehen sind, derart, dass jedem Glattrohrabschnitt mindestens ein Sicherungsmittel zugeordnet ist, wobei selbstverständlich auch eine Ausführungsform realisierbar ist, bei welcher jedem Glattrohrabschnitt zwei axial beabstandete Sicherungsmittel (z.B. zwei Bajonettverschlussradialfortsätze) zugeordnet sind, um einen Glattrohrabschnitt des rohrstrangförmigen Abgasrohres in zwei selbstständige Glattrohrabschnitte von resultierenden Rohrabschnitten aufteilen zu können, wobei dann beide Glattrohrabschnitte mit jeweils einem Sicherungselement an einem Rohrstück fixierbar sind.

Im Hinblick auf die konkrete Ausbildung der integralen Sicherungsmittel des Abgasrohres gibt es unterschiedliche Möglichkeiten. Gemeinsam haben sämtliche Ausgestaltungsformen, dass die Sicherungsmittel durch Relativverdrehen eines Sicherungselementes in Umfangsrichtung die Sicherungsmittel hintergreifen können, um somit eine axiale Sicherung zu erreichen. Bevorzugt sind die Sicherungsmittel hierzu an zumindest einer in Umfangsrichtung gerichteten Seite offen bzw. hintergreifbar, so dass durch eine verdrehende Bewegung eine Axialsicherung erreicht werden kann.

Gemäß der Erfindung umfassen die Sicherungsmittel oder sind die Sicherungsmittel ausgebildet als Teil eines Bajonettverschlusses, welcher komplettiert wird durch entsprechende Eingriffsmittel des Sicherungselementes. Hier weist das Abgasrohr Bajonettverschlussmittel mindestens zwei in Umfangsrichtung beabstandete, vorzugsweise mehr als zwei, insbesondere gleichmäßig in Umfangsrichtung verteilte, Radialfortsätze auf, die sich bevorzugt über einen Umfangswinkel von mindestens 5° in Umfangsrichtung erstrecken und die in Umfangsrichtung hintergriffen werden können von den Eingriffsmitteln des Sicherungselementes in der Art eines Bajonettverschlusses zur axialen Sicherung. In diesem Fall erfolgt die Fixierung durch eine kombinierte axiale Relativbewegung zwischen Sicherungselement und Abgasrohr und danach einer Verdrehbewegung des Sicherungselementes relativ zu dem vorzugsweise dann feststehenden Abgasrohr.

Gemäß einer alternativen Ausführungsform werden die Wellrohrabschnitte jeweils, insbesondere vollständig bzw. axial durchgehend,von Außengewindeabschnitten gebildet. Hier sind dann nicht voneinander separate Wellen vorgesehen, sondern diese werden von einem mit einer Steigung versehenen Außengewinde gebildet, welches sich zwangsläufig nicht in separaten Radialebenen verläuft, sondern sich entlang der Axialerstreckung des Abgasrohres mit der vorgegebenen Steigung, entlang windet. Bevorzugt läuft das Außengewinde in einen hierzu axial benachbarten Glattrohrabschnitt aus, insbesondere in dem die Höhe (Radialerstreckung) der Gewindegangwindung des Außengewindes in Richtung Glattrohrabschnitt langsam in Umfangsrichtung abnimmt. Anders ausgedrückt steigt die Höhe in Umfangsrichtung der Gewindegangwindung ausgehend von dem Glattrohrabschnitt in Umfangsrichtung bevorzugt an.

Im Hinblick auf eine sehr einfache Fertigbarkeit des erfindungsgemäßen Abgasrohres mit integralen Sicherungsmitteln, insbesondere im Extrusionsblasformverfahren ist es bevorzugt, wenn die Sicherungsmittel innen hohl ausgebildet sind. Dies bedeutet, dass weiterbildungsgemäß die Sicherungsmittel von der Abgasrohrinnenseite her betrachet nut- oder rinnenförmig ausgebildet sind, insbesondere als sich nach radial außen und in Umfangsrichtung erstreckende, insbesondere langgestreckte Vertiefung.

Im Hinblick auf eine weiter optimierte Fertigbarkeit hat es sich weiter als vorteilhaft erwiesen, wenn die Abgasrohrwandstärke der Sicherungsmittel zumindest näherungsweise einer Abgasrohrwandstärke eines der Glattrohrabschnitte und/oder eines der Wellrohrabschnitte entspricht, wobei es besonders bevorzugt ist, wenn die Wandstärke des Abgasrohrs axial durchgängig zumindest näherungsweise konstant ist. Bevorzugt ist die Wandstärke aus einem Dickenbereich zwischen etwa 0,8 und 2,5mm gewählt, insbesondere zwischen 1 und 2mm. Ganz besonders bevorzugt beträgt die Wandstärke zumindest näherungsweise 1,2mm.

Wie eingangs bereits erwähnt, ist es besonders vorteilhaft, wenn die Sicherungsmittel nicht nur derart ausgebildet sind, dass eine axiale Sicherung erreicht werden kann. Besonders bevorzugt ist es, wenn diese, insbesonders durch Vorsehen einer entsprechenden Vertriefung und/oder Erhöhung zudem derart ausgebildet sind, dass das Sicherungselementeinrasten bzw. einfedern kann, um somit Arretiermittel zu schaffen, die ein unbeabsichtigtes Losdrehen des Sicherungselementes in Umfangsrichtung verhindern.

Die Erfindung führt auch auf einen Abgasrohrabschnitt, der hergestellt ist durch Abtrennen eines Abschnittes von dem erfindungsgemäßen Abgasrohr. Der abgetrennte Abgasrohrabschnitt umfasst zwei Glattrohrabschnitte und mindestens einen Wellrohrabschnitt sowie integrale Sicherungsmittel benachbart zu dem mindestens einen Glattrohrabschnitt. Ferner führt die Erfindung auf die Verwendung eines nach dem Konzept der Erfindung ausgebildeten Abgasrohres oder eines Abgasrohrabschnittes zur Abgasführung einer Heizungsanlage, insbesondere in einem Gebäude (Immobilie), wobei ganz besonders bevorzugt ein Glattrohrabschnitt des Abgasrohres bzw. des Abgasrohrabschnittes in ein Muffenrohr eingesteckt ist, in welchem eine Ringdichtung vorgesehen ist, die außen dichtend an dem Glattrohrabschnitt des Abgasrohres bzw. Abgasrohrabschnittes anliegt. Das Sicherungselement verbindet das Muffenrohr mit den integralen Sicherungsmitteln also dem Bajonett des Abgasrohres bzw. Abgasrohrabschnittes, wobei ganz besonders bevorzugt von dem Sicherungselement ein Ringwulst des Muffenrohres axial übergriffen wird, wobei noch weiter bevorzugt die vorgenannte Ringdichtung innerhalb des Ringwulstes angeordnet ist.

Die Erfindung führt auch auf ein Abgasrohrsystem umfassend ein wie zuvor beschriebenes ausgebildetes Abgasrohr und/oder ein aus einem derartigen Abgasrohr einen abgetrennten Rohrabschnitt mit zwei endseitigen und ggf. weiteren Glattrohrabschnitten und mindestens einem biegbaren Wellrohrabschnitt.

Ferner umfasst das Abgasrohrssystem ein, bevorzugt hülsenförmiges Sicherungselement mit Eingriffsmitteln, wobei das Sicherungselement relativ zu dem Abgasrohr, insbesondere auf diesem verdrehbar ist, um durch eine Verdrehbewegung einen in axialer Richtung wirksamen Formschluss zwischen den Eingriffsmitteln und den Sicherungsmitteln des Abgasrohres zu bewirken, wobei die Eingriffsmittel hierbei bevorzugt die Sicherungsmittel in Umfangsrichtung hintergreifen und somit ein axiales Abziehen der Eingriffsmittel von dem Abgasrohr unterbinden. Besonders zweckmäßig ist es selbstverständlich, wenn das Abgasrohrsystem zusätzlich zu dem Abgasrohr und dem Sicherungselement mindestens ein weiteres Rohrstück umfassen, an dem die Eingriffsmittel axial, insbesondere durch radiales Hintergreifen eines Ringwulstes festgelegt sind, um somit das Rohrstück, welches selbstverständlich auch zum Durchleiten von Abgas dient und das Abgasrohr axial gegeneinander zu sichern. In dem vorgenannten Ringwulst befindet sich bevorzugt eine Ringdichtung, die radial außen an dem Glattrohrabschnitt des in das Rohr eingeführten Glattrohrabschnittes des Abgasrohres bzw. Abgasrohrabschnittes dichtend anliegt, um somit einen Austritt von Abgas sicher zu vermeiden.

Bevorzugt erfolgt gleichzeitig eine axiale Verspannung von Abgasrohr und Rohrstück, wobei hierzu vorzugsweise die Eingriffsmittel des Sicherungselementes und/oder die Sicherungsmittel es Abgasrohres mit einer entsprechenden Schräge zur Generierung einer axialen Spannkraft durch Relativverdrehen vom Sicherungselement zum Abgasrohr zu erzeugen bwz. zu bewirken.

Besonders zweckmäßig ist es, wenn das Sicherungselement mindestens einen Hintergriffabschnitt zum Hintergreifen, insbesondere eines Ringwulstes des weiter bevorzugt als Muffenrohr ausgebildeten weiteren Rohrstückes aufweist, wobei es bevorzugt ist, wenn mehrere solcher, insbesondere gleichmäßig in Umfangsrichtung beabstandeter Hintergriffabschnitte vorgesehen sind. Diese können beispielsweise laschenartig ausgebildet sein, bevorzugt jedoch derart, dass diese in radialer Richtung federn können, um das Sicherungselement axial auf das Rohrstück aufschieben zu können, insbesondere derart, dass ein Ringwulst des Rohrstückes, welcher bevorzugt im Inneren eine Dichtung zur radial äußeren Anlage an einem Glattrohrabschnitt des Abgasrohres aufweist, in radialer Richtung nach radial innen hintergriffen wird.

Die Erfindung führt auch auf ein Verfahren zum Festlegen eines nach dem Konzept der Erfindung ausgebildeten Abgasrohres oder eines daraus abgetrennten Rohrabschnittes, wobei erfindungsgemäß der Glattrohrabschnitt des Abgasrohres oder der Abgasrohrabschnitt in das Rohrstück eingesteckt wird, insbesondere derart, dass eine in einer Ringnut des Rohrstücks gehaltene Ringdichtung radial außen am Glattrohrabschnitt anliegt. Danach werden die Eingriffsmittel, die vorzugsweise von dem Abgasrohrabschnitt durchsetzt sind, relativ zu dem Abgasrohr verdreht, wodurch ein in axialer Richtung wirksamer Formschluss hergestellt wird. Ganz besonders bevorzugt ist es, wenn, insbesondere vor dem Relativverdrehen das Sicherungselement am Rohrstück axial gesichert wird, insbesondere indem das Sicherungselement auf das Rohrstück axial aufgeschoben wird, derart, dass das Sicherungselement einen Rohrschnittabschnitt, insbesondere einen Ringwulst in radialer Richtung nach innen umgreift. Für den Fall, dass entsprechend federnd ausgebildete Hintergriffabschnitte am Sicherungselement vorgesehen sind, kann das Aufschieben auch in der Befestigungsrichtung des Glattrohrabschnittes am Rohrstück erfolgen, indem die Hintergreifabschnitte über den Ringwulst des Rohrstückes geschoben werden und dann nach radial innen federn und das Sicherungselement in axialer Richtung sichern.

Weitere Vorteile, Merkmale und Einzelheiten der Erfindung ergeben sich aus der nachfolgenden Beschreibung bevorzugter Ausführungsbeispiele sowie anhand der Zeichnungen.

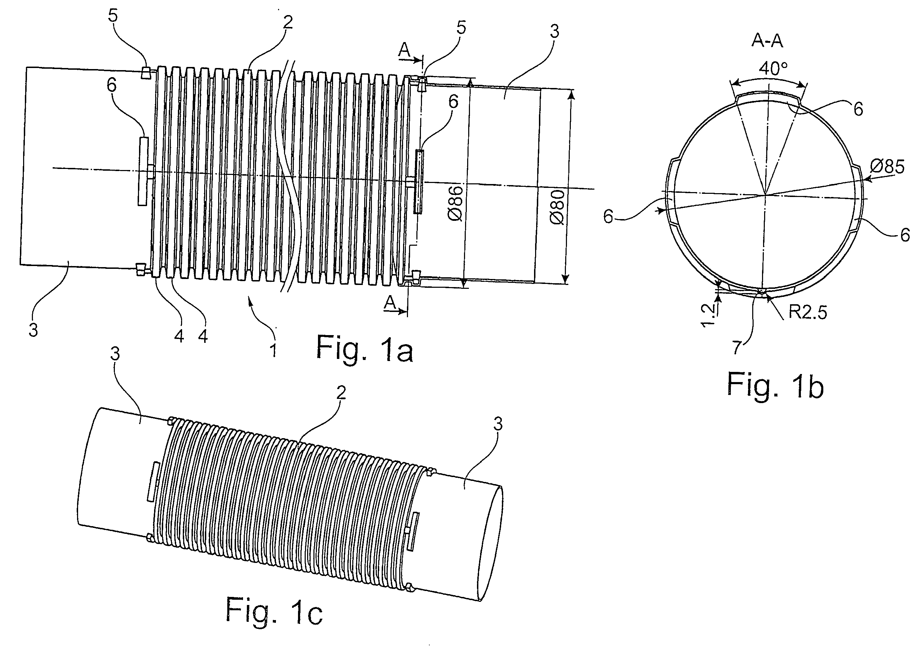

- Fig. 1 a bis Fig. 1 c: unterschiedliche, teilweise geschnittene Ansichten eines Ausschnittes eines aus einem Abgasrohr, umfassend eine Vielzahl von abwechselnd angeordneten Glattrohr- und Wellabschnitte, wobei integrale Sicherungsmittel des Abgasrohres als Teil eines Bajonettverschlusses ausgebildet sind,

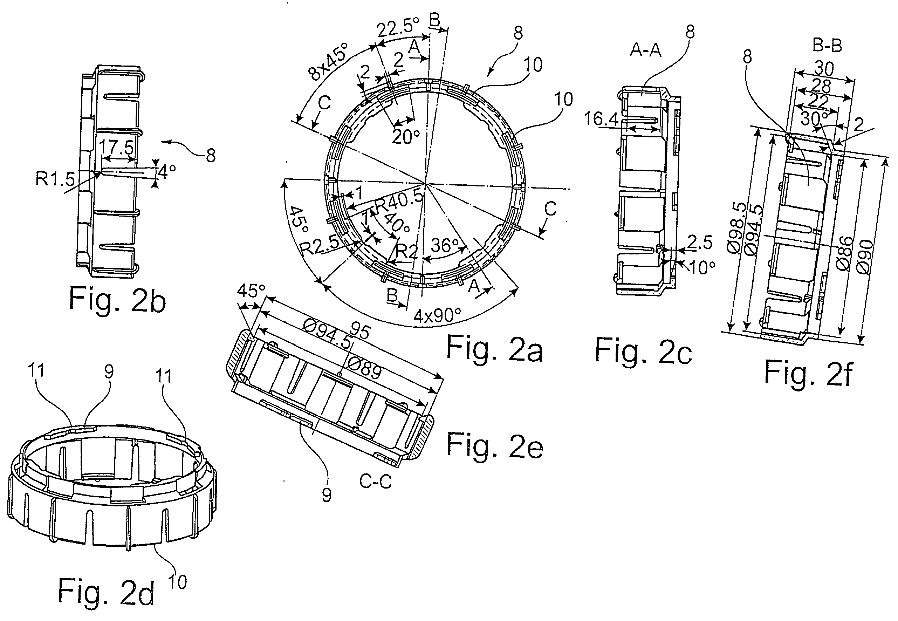

- Fig.2a bis Fig. 2f: unterschiedliche, teilweise geschnittene Ansichten eines hülsenförmigen Sicherungselementes zur Bildung eines Abgasrohrsystems mit einem Abgasrohr gemäß den Fig. 1a bis 1c, wobei am Sicherungselement nach radial innen ragende Eingriffsmittel vorgesehen sind, zur Bildung eines Bajonettverschlusses mit den Sicherungsmitteln des Abgasrohres,

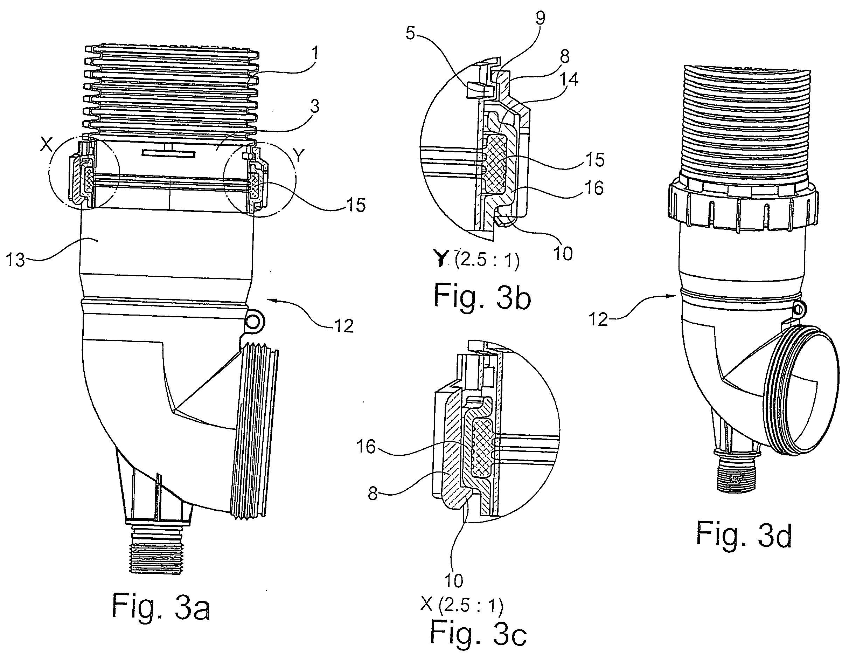

- Fig. 3a bis Fig. 3d: unterschiedliche, teilweise geschnittene Ansichten eines Abgasrohres, welches mittels eines Sicherungselementes axial an einem als Muffenrohrstück ausgebildeten Rohrstück festgelegt ist, und

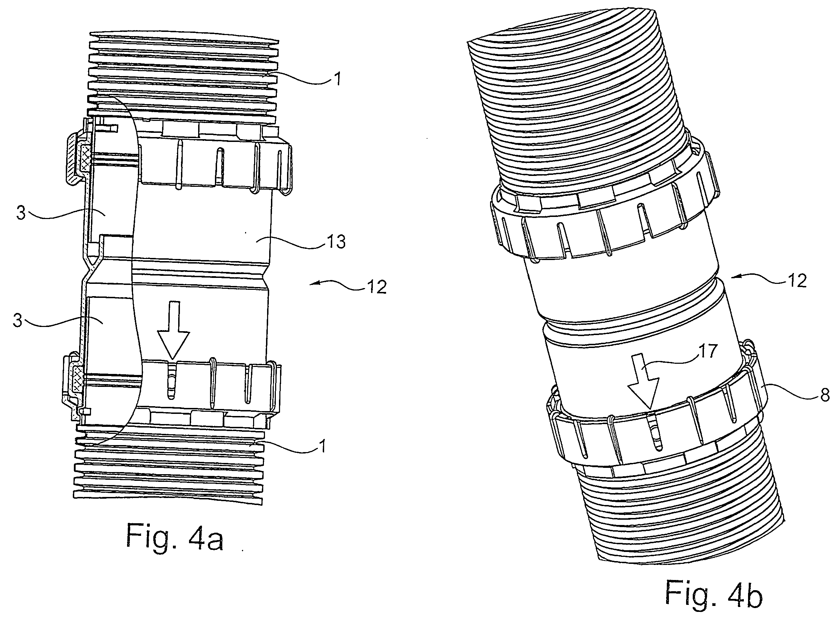

- Fig.4a und 4b: unterschiedliche, teilweise geschnittene Ansichten von zwei überein als Muffenrohrkupplungsstück ausgebildetes Rohrstück miteinander verbundene Abgasrohre, wobei die Abgasrohre jeweils über ein Sicherungselement axial an dem Rohrstück gehalten sind. m Außengewinde des Abgasrohrs verschraubt sind.

In den Figuren sind gleiche Elemente und Elemente mit der gleichen Funktion mit den gleichen Bezugszeichen gekennzeichnet.

In den Figuren 1a bis 1 c ist ein Ausschnitt eines ersten Ausführungsbeispiels eines Abgasrohres 1 aus Kunststoff gezeigt, welches im Extrusions-Blasverfahren hergestellt wurde. Zu erkennen sind hier nur zwei rechts und links eines Wellrohrabschnittes 2 angeordnete zylindrische, starre Glattrohrabschnitte 3, wobei das Abgasrohr 1 bevorzugt eine Vielzahl von abwechselnd angeordneten Wellrohrabschnitten und Glattrohrabschnitten aufweist und noch weiter bevorzugt als Rohrstrang aufrollbar ist.

Jedenfalls dienen die Glattrohrabschnitte 3 zum axialen Einschieben in ein vorzugsweise als Muffenrohr ausgebildetes Rohrstück. In dem gezeigten Ausführungsbeispiel besteht der Wellrohrabschnitt aus einer Vielzahl von axial aneinander angrenzenden Wellen 4, die von innen her betrachtet als umfangsgeschlossene Ringnuten ausgebildet sind. Die Wellen 4 befinden sich in axial zueinander benachbarten, parallel radialebenen, d.h. sie sind steigungsfrei ausgebildet, wie dies von aus dem Stand der Technik beschriebenen Wellrohren bekannt ist. Die Kontur der Wellen 4 ist von außen her betrachtet zumindest näherungsweise trapezförmig, wobei auch andere Konturen, wie beispielsweise gerundete Konturen oder rechteckige Konturen realisierbar sind.

Im Gegensatz zu aus dem Stand der Technik bekannten Abgasrohren 1 weist das Abgasrohr 1 integrale Sicherungsmittel 5 auf, hier in Form von in Umfangsrichtung beabstandeten und jeweils auf der selben axialen Höhe befindlichen, nach radial außen weisenden Radialfortsätzen 6, die zusammen mit geeigneten Eingriffsmitteln eines später noch zu erläuternden Sicherungselementes in der Art eines Bajonettverschlusses eingreifen können.

Hierzu müssen die Eingriffsmittel durch axial zwischen zwei benachbarten Radialfortsätzen 6 hindurchgeschoben und dann in Umfangsrichtung verdreht werden, so dass sie die Radialfortsätze 6 in Umfangsrichtung hintergreifen.

Um ein unbeabsichtigtes Aufdrehen bzw. Losdrehen des Sicherungselementes zu verhindern, sind am Abgasrohr 1 angeformte Arretiermittel 7 vorgesehen, in die eine entsprechende Gegenkontur des Sicherungselementes eingreifen kann. In dem gezeigten Ausführungsbeispiel handelt es sich um eine radiale Erhöhung, die in eine entsprechende Ausnehmung des Sicherungselementes, bevorzugt federnd einrasten kann, so dass zum Losdrehen ein Widerstand überwunden werden muss.

In den Fig. 2a bis 2f ist ein hülsenförmiges Sicherungselement 8 zum Zusammenwirken mit einem beispielhaft in den Fig. 1a bis 1 c gezeigten Abgasrohr 1 dargestellt. Es handelt sich um ein Kunststoffspritzgussteil welches über nach radial innen weisende und in Umfangsrichtung beabstandete Radialfortsätze aufweisende Eingriffsmittel 9 verfügt, die durch Verdrehen relativ zu den Sicherungsmitteln 5 des Abgasrohres mit diesen in der Art eines Bajonettverschlusses zusammenwirken. Axial beabstandet von diesen Eingriffsmitteln 9 sind mehrere gleichmäßig in Umfangsrichtung beabstandete Hintergriffabschnitte 10 vorgesehen, die laschenartig ausgebildet sind und mit denen eine Ringwulst eines an dem Abgasrohr festzulegenden Rohrstückes übergriffen werden kann.

Zu erkennen ist, dass das Sicherungselement 8, welches im montierten Zustand von dem Abgasrohr 1 durchsetzt ist, Gegenarretiermittel 11 zum Verrasten mit den Arretiermitteln 7 des Abgasrohres 1 aufweist. Diese sind in dem gezeigten Ausführungsbeispiel was bevorzugt, jedoch nicht zwingend ist, an die Eingriffsmittel an- bzw. in diese eingeformt. Es handelt sich in dem gezeigten Ausführungsbeispiel um mindestens eine Vertiefung.

In den Fig. 3a bis 3d ist in teilweise geschnittenen und in den Fig. 3b und 3c jeweils in einer vergrößerten Detail-Darstellung gezeigtes Abgasrohrsystem 12 dargestellt, welches ein Abgasrohr 1 umfasst, welches mit einem Glattrohrabschnitt 3 in eine Muffe eines Rohrstückes 13 eingeschoben ist, derart, dass eine in einer eingeformten Ringnut 14 des Rohrstückes aufgenommene Ringdichtung 15 von radial außen nach radial innen dichtend am Außenumfang des Glattrohrabschnittes 3 anliegen kann.

Die Ringnut 14 bildet außen eine Ringwulst 16, welcher hintergriffen ist von den Hintergriffsabschnitten 10 des Sicherungselementes 8, welches mit seinen Eingriffsmitteln 9 die Sicherungsmittel 5 des Abgasrohres 1 in Umfangsrichtung hintergreift.

In den Fig. 4a und 4b ist ein weiteres Abgasrohrsystems 12 gezeigt, mit einem hier als Adapterstück ausgebildeten Rohrstück 13, welches sich durch zwei in unterschiedlicher Axialrichtung weisende Muffenrohrabschnitte auszeichnet. In jedem ist ein Glattrohrabschnitt 3 eines nach dem Konzept der Erfindung ausgebildeten Abgasrohres 1 aufgenommen. Eine hier beispielhaft als Pfeil ausgebildete Markierung 17 auf dem nur beispielhaft als Adapterstück ausgebildeten Rohrstück zeigt eine Umfangsposition an, auf welche das Sicherungselement 8 verdrehbar ist, damit eine axiale Sicherung gegeben ist und bevorzugt auch eine Arretierung gegen ungewolltes Lösen.

Die Sicherungsmittel 5 der zuvor beschriebenen Ausführungsbeispiele sind innen hohl bzw. als innere Vertiefung ausgebildet. Bei dem Ausführungsbeispiel gemäß Fig. 1 b sind die als Bajonettverschlussteil ausgebildeten Sicherungsmittel 5 als in einer Radialebene ausgebildete, sich in Umfangsrichtung sowie in radialer Richtung nach außen erstreckende Vertiefungen ausgebildet.

Bei der Wellengeometrie des Ausführungsbeispiels gemäß den Fig. 1a und 1 c wechseln sich Wellenberge und Wellentäler in axialer Richtung ab.

### Bezugszeichenliste

- 1: Abgasrohr
- 2: Wellrohrabschnitt
- 3: Glattrohrabschnitt
- 4: Wellen
- 5: Sicherungsmittel
- 6: Radialfortsatz
- 7: Arretiermittel
- 8: Sicherungselement
- 9: Eingriffsmittel
- 10: Hintergriffabschnitt(e)
- 11: Gegenarretiermittel
- 12: Abgasrohrsystem
- 13: Rohrstück
- 14: Ringnut
- 15: Ringdichtung
- 16: Ringwulst
- 17: Markierung
- 18: Gewindeeinlauf

## Patentansprüche

1. Abgasrohr aus Kunststoff zur Abgasführung von Heizungsanlagen, mit abwechselnd angeordneten starren, zylindrischen Glattrohrabschnitten (3) und biegbaren Wellrohrabschnitten (2), wobei aus dem Abgasrohr ein Abgasrohrabschnitt mit mindestens einem Wellrohrabschnitt und zwei endseitigen Glattrohrabschnitten (3) heraustrennbar ist,
**dadurch gekennzeichnet,**
**dass** das Abgasrohr (1) einstückig mit dem Abgasrohr ausgebildete Sicherungsmittel (5) aufweist, die derart ausgebildet sind, dass an diesen ein, bevorzugt hülsenförmiges, Sicherungselement (8) durch eine Relativdrehbewegung zum Abgasrohr (1) zum Herstellen eines in axialer Richtung wirksamen Formschlusses festlegbar ist, und dass die einstückig mit dem Abgasrohr ausgebildeten Sicherungsmittel (5) Bajonettverschlussmittel umfassen, und dass jedem Glattrohrabschnitt (3) Bajonettverschlussmittel zugeordnet sind.

2. Abgasrohr nach Anspruch 1,
**dadurch gekennzeichnet,**
**dass** die Bajonettverschlussmittel mindestens zwei in Umfangsrichtung beabstandete, vorzugsweise auf derselben Axialposition angeordnete Radialfortsätze zum Zusammenwirken mit Gegenabschnitten des Sicherungselementes (8) in der Art eines Bajonettverschlusses umfassen.

3. Abgasrohr nach einem der Ansprüche 1 oder 2,
**dadurch gekennzeichnet,**
**dass** Bajonettverschlussmittel entweder nur im Bereich eines axialen Endes oder an beiden axialen Endbereichen des jeweiligen Glattrohrabschnittes (3) angeordnet sind.

4. Abgasrohr nach einem der vorhergehenden Ansprüche,
**dadurch gekennzeichnet,**
**dass** die Wellrohrabschnitte (2) jeweils mehrere ringförmige und in axial benachbarten, parallelen Radialebenen bezogen auf eine Axialerstreckung des Abgasrohres (1) angeordnete Wellen aufweist und dass die Sicherungsmittel (5) axial benachbart zu den Wellen (4), insbesondere in einem an einen Glattrohrabschnitt (3) angrenzenden Bereich vorgesehen sind.

5. Abgasrohr nach einem der vorhergehenden Ansprüche,
**dadurch gekennzeichnet,**
**dass** die Sicherungsmittel (5) von der Abgasrohrinnenseite her betrachtet nut- oder rinnenförmig, insbesondere als sich nach radial außen und in Umfangsrichtung erstreckende Vertiefung ausgebildet sind.

6. Abgasrohr nach einem der vorhergehenden Ansprüche,
**dadurch gekennzeichnet,**
**dass** eine Abgasrohrwandstärke der Sicherungsmittel (5) einer Abgasrohrwandstärke eines Glattrohrabschnitts (3) und/oder eines Wellrohrabschnittes (2) entspricht, insbesondere derart, dass die Wandstärke des Abgasrohrs (1) axial durchgängig, zumindest näherungsweise, konstant ist.

7. Abgasrohr nach einem der vorhergehenden Ansprüche,
**dadurch gekennzeichnet,**
**dass** das Abgasrohr, insbesondere die Sicherungsmittel (5) Arretiermittel, bevorzugt umfassend eine axiale und/oder radiale Vertiefung oder Erhöhung, aufweist, die derart ausgebildet sind, dass das Sicherungselement (5), insbesondere durch Verrasten, an dem Abgasrohr als Sicherung gegen ungewolltes Losdrehen haltbar ist.

8. Verwendung eines Abgasrohrabschnittes mit zwei endseitigen Glattrohrabschnitten (3) und mindestens einem Wellrohrabschnitt sowie mit einstückig mit dem Abgasrohr ausgebildeten Sicherungsmitteln, welcher Abgasrohrabschnitt erhalten ist durch Abtrennen von einem Abgasrohr nach einem der vorhergehenden Ansprüche, zur Abgasführung von Abgas einer Heizungsanlage, insbesondere in einem Gebäude.

9. Abgasrohrsystem, umfassend ein Abgasrohr (1) nach einem der Ansprüche 1 bis 7 oder einen aus einem derartigen Abgasrohr (1) abgetrennten Abgasrohrabschnitt, mit zwei endseitigen Glattrohrabschnitten (3) und mit mindestens einem biegbaren Wellrohrabschnitt (2), weiter umfassend ein bevorzugt hülsenförmiges Sicherungselement (8), das Eingriffsmittel (9) aufweist, die derart ausgebildet sind, dass diese durch eine Relativdrehbewegung des Sicherungselementes (8) zum Abgasrohr (1) bzw. Abgasrohrabschnitt unter Ausbildung eines in axialer Richtung wirksamen Formschlusses mit den als Bajonettverschlussmitteln ausgebildeten Sicherungsmitteln (5) des Abgasrohres (1) bzw. des Abgasrohrabschnittes verbindbar und/oder verbunden sind.

10. System nach Anspruch 9,
**dadurch gekennzeichnet,**
**dass** die Eingriffsmittel (9) und/oder die Sicherungsmittel (5) einen Steigungsabschnitt zum axialen Verspannen des Abgasrohrs (1) oder des Abgasrohrabschnittes mit dem Sicherungselement (8) aufweisen.

11. System nach einem der Ansprüche 9 oder 10,
**dadurch gekennzeichnet,**
**dass** die Eingriffsmittel (9) Bajonettverschlussmittel, vorzugsweise umfassend nach radial innen weisende, Bajonettverschlusselemente zum Zusammenwirken mit den Sicherungsmitteln (5) in der Art eines Bajonettverschlusses aufweisen.

12. System nach einem der Ansprüche 9 bis 11,
**dadurch gekennzeichnet,**
**dass** ein Glattrohrabschnitt (3) des Abgasrohres (1) oder des Abgasrohrabschnittes in ein, bevorzugt als Muffenrohr ausgebildetes, vorzugsweise starres, Rohrstück (13) eingeschoben ist und an diesem mittels des Sicherungselementes (8) axial gesichert ist.

13. System nach einem der Ansprüche 9 bis 12,
**dadurch gekennzeichnet,**
**dass** das Sicherungselement (8) mindestens einen Hintergreifabschnitt (10) zum Hintergreifen eines Ringwulstes (16) eines bevorzugt als Muffenrohr ausgebildeten Rohrstücks (13) aufweist, in das ein Glattrohrabschnitt (3) des Abgasrohres (1) und/oder des Abgasrohrabschnittes einschiebbar ist.

14. System nach Anspruch 13,
**dadurch gekennzeichnet,**
**dass** der mindestens eine, insbesondere laschenartige, Hintergriffabschnitt (10) in radialer Richtung federnd ausgebildet ist.

15. Verfahren zum Festlegen eines Abgasrohres nach einem Ansprüche 1 bis 7 oder eines hiervon abgetrennten Abgasrohrabschnittes, umfassend zwei Glattrohrabschnitte (3) und mindestens einen Wellrohrabschnitt (2) an einem, bevorzugt als Muffenrohr ausgebildeten, bevorzugt eine als innenliegende Dichtung zur äußeren Anlage an einem der Glattrohrabschnitte ausgebildete Ringdichtung aufweisenden, Rohrstück (13) mit den Schritten:
- Einstecken eines Glattrohrabschnittes des Abgasrohres oder des Abgasrohrabschnittes in das Rohrstück, und
- Relativverdrehen eines Eingriffsmittel (9) aufweisenden, bevorzugt hülsenförmigen, Sicherungselementes (8) relativ zu dem Abgasrohr (1), derart, dass die Eingriffsmittel (9) in Eingriff kommen mit den als Bajonettverschlussmittel ausgebildeten Sicherungsmitteln (5) des Abgasrohres (1) und dadurch ein axial wirksamer Formschluss erreicht wird.

16. Verfahren nach Anspruch 15,
**dadurch gekennzeichnet,**
**dass** das, vorzugsweise axial von dem Abgasrohr (1) durchsetzte, Sicherungselement (8), vorzugsweise vor dem Relativverdrehen zum Abgasrohr (1), axial an dem Rohrstück (13), insbesondere durch Hintergreifen eines Ringwulstes (16), gesichert wird.

## Claims

1. An exhaust pipe made of plastics for exhaust gas routing of heating systems with alternately arranged rigid cylindrical plain pipe portions (3) and bendable corrugated pipe portions (2), wherein
an exhaust pipe portion having at least one corrugated pipe portion and two plain pipe portions (3) at the end sides can be cut out of the exhaust pipe,
**characterized in**
**that** the exhaust pipe (1) has securing means (5) which are formed integrally with the exhaust pipe and which are formed in such a manner that a preferably sleeve-shaped securing element (8) can be fixed to said securing means by a rotational movement relative to the exhaust pipe (1) for establishing a positive-locking fit that acts in the axial direction, and that the securing means (5) formed integrally with the exhaust pipe comprise bayonet coupling means and that each plain pipe portion (3) is assigned a bayonet coupling means.

2. The exhaust pipe according to claim 1, **characterized in that** the bayonet coupling means comprise at least two radial projections, which are spaced apart in the circumferential direction and are preferably arranged on the same axial position, for cooperating with counter portions of the securing element (8) in the manner of a bayonet coupling.

3. The exhaust pipe according to claim 1 or 2, **characterized in that** the bayonet coupling means is either arranged only in the region of an axial end or at both axial end regions of the respective plain pipe portion (3).

4. The exhaust pipe according to any one of the preceding claims, **characterized in that** the corrugated pipe portions (2) each have a plurality of corrugations which are ring-shaped and are arranged, with respect to an axial extent of the exhaust pipe (1), in axially adjacent and parallel radial planes, and that the securing means (5) are provided axially adjacent to the corrugations (4), in particular in a region adjoining a plain pipe portion (3).

5. The exhaust pipe according to any one of the preceding claims, **characterized in that**, viewed from inside of the exhaust pipe, the securing means (5) are formed in a groove-shaped or notch-shaped manner, in particular as an indentation extending radially outwards and in the circumferential direction.

6. The exhaust pipe according to any one of the preceding claims, **characterized in that** an exhaust pipe wall thickness of the securing means (5) corresponds to an exhaust pipe wall thickness of a plain pipe portion (3) and/or of a corrugated pipe portion (2), in particular in such a manner that the wall thickness of the exhaust pipe (1) is axially and continuously constant, at least approximately.

7. The exhaust pipe according to any of the preceding claims, **characterized in that** the exhaust pipe, in particular the securing means (5), has locking means which preferably comprise an axial and/or radial indentation or elevation which are/is formed in such a manner that the securing element (5) can be retained on the exhaust pipe, in particular by locking in place, as protection against unintended loosening.

8. Use of an exhaust pipe portion having two plain pipe portions (3) at the end sides and at least one corrugated pipe portion and having securing means that are formed integrally with the exhaust pipe, which exhaust pipe portion is obtained by cutting it off from an exhaust pipe according to any one of the preceding claims, for exhaust gas routing of exhaust gas of a heating system, in particular in a building.

9. An exhaust pipe system, comprising an exhaust pipe (1) according to any one of claims 1 to 7, or an exhaust pipe portion cut off from such an exhaust pipe (1) and having two plain pipe portions (3) at the end sides and having at least one bendable corrugated pipe portion (2), further comprising a preferably sleeve-shaped securing element (8) that has engagement means (9) that are formed in such a manner that they can be connected and/or are connected by a rotational movement of the securing element (8) relative to the exhaust pipe (1) or exhaust pipe portion, thereby forming a positive-locking fit, which acts in the axial direction, with the securing means (5) formed as bayonet coupling means.

10. The system according to claim 9, **characterized in that** the engagement means (9) and/or the securing means (5) have/has a pitch portion for axially bracing the exhaust pipe (1) or the exhaust pipe portion with the securing means (8).

11. The system according to claim 9 or 10, **characterized in that** the engagement means (9) have bayonet coupling means which preferably comprise radially inwards facing bayonet coupling elements for cooperating with the securing means (5) in the manner of a bayonet coupling.

12. The system according to any one of claims 9 to 11, **characterized in that** a plain pipe portion (3) of the exhaust pipe (1) or the exhaust pipe portion is inserted into a preferably rigid pipe section (13) preferably formed as a socket pipe and is axially secured thereto by means of the securing element (8).

13. The system according to any one of claims 9 to 12, **characterized in that** the securing element has at least one rear-grip portion (10) for engaging behind an annular bead (16) of a pipe section (13) preferably formed as socket pipe into which a plain pipe portion (3) of the exhaust pipe (1) and/or the exhaust pipe portion can be inserted.

14. The system according to claim 13, **characterized in that** the at least one, in particular tongue-like, rear-grip portion (10) is formed to be resilient in the radial direction.

15. A method for fixing an exhaust pipe according to any one of claims 1 to 7 or an exhaust pipe portion cut off therefrom, comprising two plain pipe portions (3) and at least one corrugated pipe portion (2), to a pipe section (13) that is preferably formed as a socket pipe and preferably has a ring seal that is preferably formed as an inside seal for engaging on the outside on one of the plain pipe portions, the method comprising the steps:
- inserting a plain pipe portion of the exhaust pipe or the exhaust pipe portion into the pipe section, and
- rotating, relative to the exhaust pipe (1), a preferably sleeve-shaped securing element (8) having engagement means (9) in such a manner that the engagement means (9) come into engagement with the securing means (5) formed as bayonet coupling means of the exhaust pipe (1), thereby achieving a positive-locking fit that acts in the axial direction.

16. The method according to claim 15, **characterized in that** the securing element (8) which is preferably penetrated axially by the exhaust pipe (1), is preferably axially secured on the pipe section (13), in particular by engaging behind a ring bead (16), against rotating relative to the exhaust pipe (1).

## Revendications

1. Tuyau d'échappement en matière plastique pour la conduite de gaz d'échappement d'installations de chauffage, avec des sections de tuyau lisse cylindriques rigides (3) et des sections de tuyau ondulé flexibles (2) agencées en alternance, dans lequel une section de tuyau d'échappement avec au moins une section de tuyau ondulé et deux sections de tuyau lisse d'extrémité (3) peut être séparée du tuyau d'échappement, **caractérisé en ce que** le tuyau d'échappement (1) présente des moyens de fixation (5) réalisés d'une seule pièce avec le tuyau d'échappement, qui sont configurés de telle manière qu'un élément de fixation (8), de préférence en forme de douille, puisse être fixé à celui-ci par un mouvement de rotation relatif par rapport au tuyau d'échappement (1) pour réaliser un assemblage par emboîtement actif en direction axiale, et **en ce que** les moyens de fixation (5) réalisés d'une seule pièce avec le tuyau d'échappement comprennent des assemblages à baïonnette, et **en ce que** des moyens d'assemblage à baïonnette sont associés à chaque section de tuyau lisse (3).

2. Tuyau d'échappement selon la revendication 1, **caractérisé en ce que** les moyens d'assemblage à baïonnette comprennent au moins deux prolongements radiaux espacés en direction périphérique, agencés de préférence à la même position axiale, destinés à coopérer avec des parties correspondantes de l'élément de fixation (8) à la manière d'un assemblage à baïonnette.

3. Tuyau d'échappement selon l'une des revendications 1 ou 2, **caractérisé en ce que** des moyens d'assemblage à baïonnette sont agencés soit uniquement dans la région d'une extrémité axiale soit aux deux régions d'extrémité axiales de la section de tuyau lisse respective (3).

4. Tuyau d'échappement selon l'une quelconque des revendications précédentes, **caractérisé en ce que** les sections de tuyau ondulé (2) présentent respectivement plusieurs ondulations annulaires et disposées dans des plans radiaux parallèles, axialement voisins, par rapport à une extension axiale du tuyau d'échappement (1), et **en ce que** les moyens de fixation (5) sont prévus axialement à proximité des ondulations (4), en particulier dans une région adjacente à une section de tuyau lisse (3).

5. Tuyau d'échappement selon l'une quelconque des revendications précédentes, **caractérisé en ce que** les moyens de fixation (5), considérés à partir du côté intérieur du tuyau d'échappement, sont réalisés en forme de rainure ou de gorge, en particulier sous la forme d'un creux s'étendant en direction périphérique et radialement vers l'extérieur.

6. Tuyau d'échappement selon l'une quelconque des revendications précédentes, **caractérisé en ce qu'**une épaisseur de paroi de tuyau d'échappement des moyens de fixation (5) correspond à une épaisseur de paroi de tuyau d'échappement d'une section de tuyau lisse (3), et/ou d'une section de tuyau ondulé (2), en particulier de telle manière que l'épaisseur de paroi de tuyau d'échappement (1) soit de façon axialement continue, au moins approximativement constante.

7. Tuyau d'échappement selon l'une quelconque des revendications précédentes, **caractérisé en ce que** le tuyau d'échappement, en particulier les moyens de fixation (5), présentent des moyens de blocage, comprenant de préférence une cavité ou une saillie axiale et/ou radiale, qui est configurée de telle manière que l'élément de fixation (5) puisse être maintenu, en particulier par encliquetage, sur le tuyau d'échappement comme fixation contre un desserrage rotatif involontaire.

8. Utilisation d'une section de tuyau d'échappement avec deux sections de tuyau lisse d'extrémité (3) et au moins une section de tuyau ondulé ainsi qu'avec des moyens de fixation réalisés d'une seule pièce avec le tuyau d'échappement, section de tuyau d'échappement qui peut être obtenue par séparation d'un tuyau d'échappement selon l'une quelconque des revendications précédentes, pour la conduite de gaz d'échappement d'une installation de chauffage, en particulier dans un bâtiment.

9. Système de tuyau d'échappement, comprenant un tuyau d'échappement (1) selon l'une quelconque des revendications 1 à 7 ou une section de tuyau d'échappement séparée d'un tel tuyau d'échappement (1), avec deux sections de tuyau lisse d'extrémité (3) et avec au moins une section de tuyau ondulé flexible (2), comprenant en outre un élément de fixation (8) de préférence en forme de douille, qui présente des moyens d'engagement (9), qui sont configurés de telle manière qu'ils soient et/ou puissent être assemblés, par un mouvement de rotation relatif de l'élément de fixation (8) par rapport au tuyau d'échappement (1) ou à la section de tuyau d'échappement, en formant un assemblage par emboîtement actif en direction axiale, aux moyens de fixation (5) du tuyau d'échappement (1) ou de la section de tuyau d'échappement configurés sous forme de moyens d'assemblage à baïonnette.

10. Système selon la revendication 9, **caractérisé en ce que** les moyens d'engagement (9) et/ou les moyens de fixation (5) présentent une section en pente pour le serrage axial du tuyau d'échappement (1) ou de la section de tuyau d'échappement avec l'élément de fixation (8).

11. Système selon l'une des revendications 9 ou 10, **caractérisé en ce que** les moyens d'engagement (9) présentent des moyens d'assemblage à baïonnette, comprenant de préférence des éléments d'assemblage à baïonnette orientés vers l'intérieur destinés à coopérer avec les moyens de fixation (5) à la manière d'un assemblage à baïonnette.

12. Système selon l'une quelconque des revendications 9 à 11, **caractérisé en ce qu'**une section de tuyau lisse (3) du tuyau d'échappement (1) ou de la section de tuyau d'échappement est insérée dans une pièce tubulaire (13), de préférence en forme de manchon tubulaire, de préférence rigide, et est fixée axialement à celle-ci au moyen de l'élément de fixation (8).

13. Système selon l'une quelconque des revendications 9 à 12, **caractérisé en ce que** l'élément de fixation (8) présente au moins une section d'accrochage arrière (10) pour l'accrochage à un bourrelet annulaire (16) d'une pièce tubulaire (13) configurée de préférence en forme de manchon tubulaire, dans laquelle une section de tuyau lisse (3) du tuyau d'échappement (1) et/ou de la section de tuyau d'échappement peut être insérée.

14. Système selon la revendication 13, **caractérisé en ce que** ladite au moins une section d'accrochage arrière (10), en particulier en forme de patte, est réalisée sous forme élastique en direction radiale.

15. Procédé de fixation d'un tuyau d'échappement selon l'une quelconque des revendications 1 à 7 ou d'une section de tuyau d'échappement séparée de celui-ci, comprenant deux sections de tuyau lisse (3) et au moins une section de tuyau ondulé (2) à une pièce tubulaire (13) configurée de préférence sous forme de manchon tubulaire, présentant de préférence un joint d'étanchéité intérieur pour l'appui extérieur sur un joint d'étanchéité annulaire formé sur une des sections de tuyau lisse, présentant les étapes suivantes:
- engager une section de tuyau lisse du tuyau d'échappement ou de la section de tuyau d'échappement dans la pièce tubulaire, et
- opérer une rotation relative d'un élément de fixation (8) de préférence en forme de douille, présentant des moyens d'engagement (9), par rapport au tuyau d'échappement (1), de telle manière que les moyens d'engagement (9) viennent en engagement avec les moyens de fixation (5) du tuyau d'échappement (1) configurés en forme de moyens d'assemblage à baïonnette et permettent d'obtenir ainsi un assemblage par emboîtement axialement actif.

16. Procédé selon la revendication 15, **caractérisé en ce que** l'élément de fixation (8), traversé de préférence axialement par le tuyau d'échappement (1), est fixé axialement à la pièce tubulaire (13), en particulier par accrochage arrière d'un bourrelet annulaire (16), de préférence avant la rotation relative par rapport au tuyau d'échappement (1).
